# EUROPEAN PATENT APPLICATION

(11) **EP 4 459 815 A1**
(43) Date of publication of application: **06.11.2024**
(21) Application number: 23465507.4
(22) Date of filing: 03.05.2023
(51) Int. Cl.: H02B 1/052

(54) **HOUSING FOR MOUNTING ELECTRICAL EQUIPMENT ON A SURFACE**

(71) Applicant: Siemens Aktiengesellschaft, 80333 München (DE)
(72) Inventor: Popa Bianu, Tiberiu, 550345 Sibiu, jud. Sibiu (RO); Boia, Constantin, 550019 Sibiu, jud. Sibiu (RO); Kogard, Markus, 2102 Hagenbrunn (AT); Kritsch, Alexander, 1180 Wien (AT); Vasile, Alexandru, 550344 Sibiu, jud. Sibiu (RO)
(74) Representative: Preda, Raluca-Laura

(57) **Abstract**

The invention relates to a housing (1) for mounting electrical equipment on a surface, comprising a rear-plate (2) and a moveable element (3); wherein the moveable element (3) comprises a first mounting aperture (4a) and the rear-plate (2) comprises at least one second mounting aperture (4b); wherein the mounting apertures (4a, 4b) are configured to receive mounting means (5); wherein the moveable element (3) is configured to selectively provide a mounting position and a retracted position; and wherein at the mounting position the first mounting aperture (4a) is positioned outside of an area of the rear-plate (2) and at the retracted position the moveable element (3) and the first mounting aperture (4) are positioned within the area of the rear-plate (2) .

## Description

*Independent of the grammatical term usage, individuals with male, female or other gender identities are included within the term.*

The invention relates to a housing for mounting electrical equipment on a surface.

Know housings for mounting electrical equipment on a surface typically rely on additional complex profiles that engage with the housing and fastening devices that protrude from the housing, for example a housing disclosed in US7042731B2.

It is therefore a goal of the present invention to provide a housing which overcomes the above-mentioned disadvantages. In particular, a housing shall be provided that has a compact geometrical form factor, is easy to manufacture and relies on minimal additional components for mounting the housing on a surface.

The object of the invention is achieved by the independent claim. The dependent claims describe advantageous developments and modifications of the invention.

In accordance with the invention there is provided a housing for mounting electrical equipment on a surface, comprising a rear-plate and a moveable elements
wherein the moveable element comprises a first mounting aperture and the rear-plate comprises at least one second mounting aperture;
wherein the mounting apertures are configured to receive mounting means;
wherein the moveable element is configured to selectively provide a mounting position and a retracted position;
and wherein at the mounting position the first mounting aperture is positioned outside of an area of the rear-plate and at the retracted position the moveable element and the first mounting aperture are positioned within the area of the rear-plate.

An important advantage of the housing according to the present invention is that in a non-mounted state, where the moveable element provides a retracted position, the housing has a minimal geometrical form factor, thereby limiting packaging space, shipping volume, shipping cost and CO2 emissions of transportation. Also, in a retracted position there are no protruding parts of the housing such as lugs, thereby minimizing the risk of damage to the housing during transport and handling.

Another important advantage of the housing according to the present invention is that the housing can be mounted to a surface with simple and common fastening means such as screws, bolts, hooks, nails, or the like, and the housing does not solely rely on mounting structures such as rails, additional plastic parts, or the like.

Advantageous configurations and embodiments of the method according to the invention follow from the claims dependent on claim 1 as well as the following description.

According to an embodiment, the housing further comprises at least one elastically deformable element and the moveable element is connected to the rear-plate via at least one elastically deformable element.

With this configuration, it is possible for the moveable element to selectively provide a mounting position and a retracted position for multiple uses, for example when the housing is dismounted from a surface, transported and mounted to a different surface. It can for example be made of plastic, specifically polycarbonate, glass-fiber reinforced polycarbonate, polypropylene, polyethylene; metal, or any other elastically deformable material.

According to an embodiment, the at least one elastically deformable element is configured for a first stable state and a second stable state; wherein the first stable state is at the retracted position of the moveable element and the second stable state is in the mounting position of the moveable element.

This configuration allows for stable and secure positioning of the moveable element and the first mounting aperture, particularly in the retracted position and in the mounting position. It also precisely defines these positions.

According to an embodiment, the at least one elastically deformable element is of a ribbon-type.

A ribbon-type is especially advantageous regarding strength, elasticity, and manufacturability.

According to an embodiment, the moveable element is connected to the rear-plate via a plurality of elastically deformable elements which are attached to the moveable element via a plurality of attachment positions; wherein the attachment positions are spaced apart.

By connecting the moveable element to the rear-plate via a plurality of elastically deformable elements, the tendency for the moveable element to remain in either the retracted position or the mounting position is increased because the force that is needed for a transition from one of these positions to the other is increased, thereby improving usability. By spacing apart the attachment positions of the plurality of elastically deformable elements, for example by having the attachment positions on different sides or on different longitudinal positions of the moveable element, a transition of the moveable element from the retracted position to the mounting position or vice versa can take place in only one axis, for example a longitudinal axis of the moveable element, thereby further improving usability.

According to an embodiment, wherein the plurality of elastically deformable elements are partly grouped together.

By partly grouping together the plurality of elastically deformable elements each elastically deformable element can be designed for optimal elasticity and manufacturability.

According to an embodiment, the rear-plate, the moveable element and the at least one elastically deformable element are integrally formed.

This configuration allows for an efficient and cost-effective manufacturing process, for example by molding or additive manufacturing all the parts in a single process step. They can for example be made of plastic, specifically polycarbonate, glass-fiber reinforced polycarbonate, polypropylene or polyethylene.

According to an embodiment, the housing is integrally formed.

This configuration, where the housing, including the rear-plate, the moveable element and the at least one elastically deformable element, is integrally formed, allows for an efficient and cost effective manufacturing process, for example by molding or additive manufacturing the complete housing including all the parts in a single process step. It can for example be made of plastic, specifically polycarbonate, glass-fiber reinforced polycarbonate, polypropylene or polyethylene.

According to an embodiment, the rear-plate comprises at least one third mounting aperture.

By adding a third mounting aperture the mounting of the housing to a surface can be made more secure and rigid.

According to an embodiment, the mounting apertures are arranged in a triangle pattern.

By arranging the mounting apertures in a triangle pattern the mounting of the housing to a surface can be made even more secure and rigid.

According to an embodiment, the area of the rear-plate is a boundary surface of the housing.

This means, that sides of the housing circumscribe the area of the rear-plate. In this configuration, a geometrical form factor of the housing is further reduced.

According to an embodiment, the rear-plate comprises at least one mounting hook and the moveable element comprises a latch; wherein the at least one mounting hook and the latch are configured to receive a mounting rail, specifically a DIN rail, more specifically a top hat rail according to IEC/EN 60715.

This allows for the housing to be mounted on a surface not only by mounting means but also by means of a mounting rail, specifically a DIN rail, more specifically a top hat rail according to IEC/EN 60715, thereby further enhancing the use cases for the housing. A synergy effect is formed by the moveable element by not only comprising the first mounting aperture but also comprising a latch. When mounting the housing to a mounting rail, the moveable element allows the latch to retract and facilitate a clamping of the mounting rail between the at least one mounting hook and the latch.

According to an embodiment, the at least one elastically deformable element is configured to spring-load the latch.

In this configuration, a clamping of a rail between the at least one mounting hook and the latch is further improved.

Embodiments of the invention are now described, by way of example only, with reference to the accompanying drawings, of which:
- Figure 1: shows a rear view of an exemplary embodiment of a housing with a moveable element in a retracted position according to the invention;
- Figure 2: shows a rear view of an exemplary embodiment of the housing with the moveable element in a mounting position according to the invention;
- Figure 3: shows an axonometric rear view of an exemplary embodiment of the housing with the moveable element in the retracted position according to the invention;
- Figure 4: shows an axonometric rear view of an exemplary embodiment of the housing with the moveable element in the mounting position according to the invention;
- Figure 5: shows an axonometric front view of an exemplary embodiment of the housing with the moveable element in the mounting position according to the invention;
- Figure 6: shows an axonometric rear view of an exemplary embodiment of the housing with the moveable element in the retracted position and fastening means according to the invention; and
- Figure 7: shows an axonometric rear view of an exemplary embodiment of the housing with the moveable element in the retracted position and fastening means according to the invention; and
- Figure 8: shows an axonometric rear view of an exemplary embodiment of the housing with the moveable element in the retracted position and a mounting rail according to the invention; and

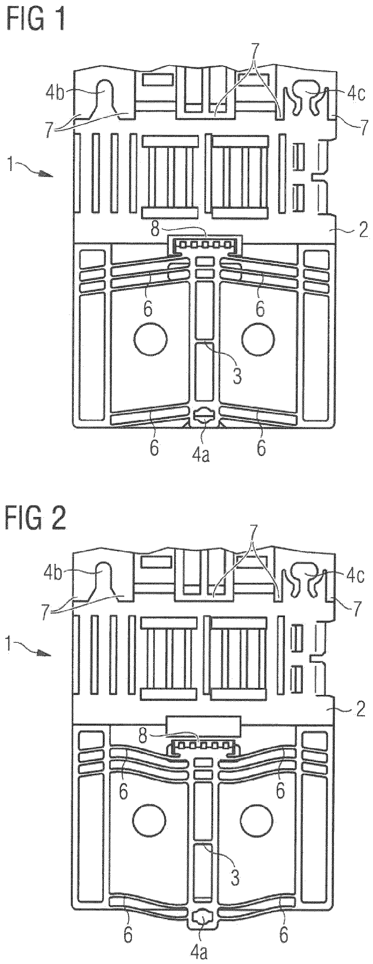

Fig. 1 shows a rear view of an exemplary embodiment of a housing with a moveable element in a retracted position according to the invention.

The housing 1 comprises a rear-plate 2 and a moveable element 3. The moveable element 3 comprises a first mounting aperture 4a. In this embodiment, the moveable element 3 is connected to the rear-plate 2 via several elastically deformable elements 6. The elastically deformable elements 6 can be formed for example as ribbon-like or bridge-like structures. In this embodiment, the moveable element 3 is connected to the rear-plate via a plurality of elastically deformable elements 6, that are attached to the moveable element via a plurality of attachment positions. In this example, there are ten elastically deformable elements 6 and ten attachment positions on the moveable element 3. The plurality of attachment positions can be spaced apart, meaning that the elastically deformable elements 6 can attach to the moveable element 3 on different sides or different positions on a longitudinal axis of the moveable element 3. In this embodiment, the plurality of elastically deformable elements 6 are partly group together. For example, there can be a group of two and a group of three elastically deformable elements 6 on each side of the moveable element 3. It is noted however, that only a single elastically deformable element 6 is needed for the functionality of the housing 1.

However, the moveable element 3 can also be for example connected to the rear-plate 2 via a sliding mechanism or any other mechanism that allows for the moveable element 3 to provide a mounting position and a retracted position.

The housing 1 or parts thereof, namely the rear-plate 2, the moveable element 3 and the elastically deformable element 6, can each be made for example of plastic, for example by a molding process or by an additive manufacturing process. It is also possible that the housing 1 and parts thereof are integrally formed. For example, the housing 1, including the rear-plate 2, the moveable element 3 and the deformable element 6 can be integrally formed. It is also possible that parts of the housing 1 are integrally formed. For example, the rear-plate 2, the moveable element 3 and the deformable element 6 can be integrally formed.

In this embodiment, the moveable element 3 provides a retracted position, wherein the moveable element 3 and the first mounting aperture 4a are positioned within the area of the rear-plate 2. In this position, the housing 1 has an overall minimal geometrical form factor. The area of the rear-plate 2 is defined by a boundary line that is visible when looking straight down on the rear-plate 2. The housing 1 can be essentially of a cuboidal form and the rear-plate 2 can be essentially of a rectangular form. The area of the rear-plate 2 can also be a boundary surface of the housing 1, meaning that the area is defined by a boundary line that is visible when looking straight down on the housing 1 from a rear-view.

In this embodiment, the rear-plate 2 of the housing 1 further comprises a second mounting aperture 4b and a third mounting aperture 4c, that are configured to receive mounting means 5. The second mounting aperture 4b and the third mounting aperture 4c can protruded from a surface of the rear-plate 2. In this embodiment, the mounting apparatuses 4a, 4b and 4c are arranged in a triangle pattern.

In this example, the second mounting aperture 4b is generally U-shaped. The second mounting aperture 4b can for example receive a mounting means 5 be being slid onto the mounting means 5. In this example, the mounting means 5 can be a screw, a bolt, a hook, a nail, or the like, wherein the mounting means 5 is attached to a surface and protrudes from the surface.

In this example, the third mounting aperture 4c is generally Ω-shaped. The third mounting aperture 4c can for example receive a mounting means 5 be being slid onto the mounting means 5. In this example, the mounting means 5 can be a screw, a bolt, a hook, a nail, or the like, wherein the mounting means 5 is attached to a surface and protrudes from the surface. The Ω-shape of the third mounting aperture 4c grips the mounting means 5 and prevents the third mounting aperture 4c and therefore the housing 1 from easily being slid off or sliding off the mounting means 5.

However, it is noted that only a second mounting aperture 4b is needed for the functionality of the housing 1. It is further noted that different combinations of U-shaped, Ω-shaped or other shapes for the mounting apertures are possible and within the scope of this invention.

Generally, the housing 1 is used for mounting electrical equipment on a surface. The electrical equipment can be for example power supply units, circuit breakers, electrical control equipment or the like. The surface can be for example a wall, the inside of a cabinet or the like.

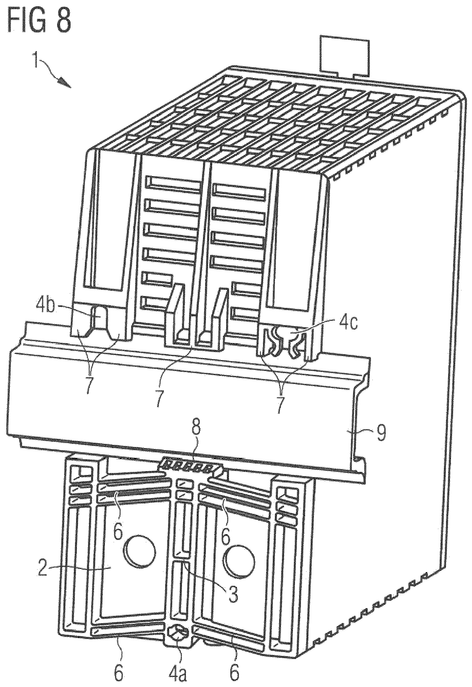

Fig. 2 shows a rear view of an exemplary embodiment of the housing with the moveable element in a mounting position according to the invention. In this embodiment, the moveable element 3 provides a mounting position, wherein the first mounting aperture 4a is positioned outside of an area of the rear-plate 2. In the mounting position, the first mounting aperture 4a is accessible. As can be seen, the moveable element 3 transitioned from providing a retracted position in Fig. 1 to providing a mounting position in Fig. 2. This transition can be done for example manually by gripping the moveable element 3 and moving it from one position to the other. In another embodiment further explained in Fig. 8, the moveable element 3 further comprises a latch 8. The latch 8 doubles in function as it can also provide a gripping surface further facilitating the gripping.

In this embodiment of the invention, the moveable element 3 is connected to the rear-plate 2 via a plurality of elastically deformable elements 6. During the transition of the mounting position to the retracted position and vice versa, the elastically deformable elements 6 provide resistance to the transition because they must be compressed at first. After a certain point in the transition the elastically deformable elements 6 support the transition because they can expand again. Therefore, two stable states can be provided by the moveable element 3, the retracted position and the mounting position.

In this embodiment, the first mounting aperture 4a is a mounting hole. It is configured to receive mounting means 5. The mounting means 5 for example can protrude from a surface and then be received by the first mounting aperture 4a or the mounting means 5 can be received by the first mounting aperture 4a and then be attached to a surface. In the latter example, the mounting means 5 can be for example a screw, wherein a screw head of the screw engages the first mounting aperture 4a and a screw thread of the screw is screwed into a surface. However, the mounting means 5 could also be for example a bolt with a bolt head, a nail, or the like.

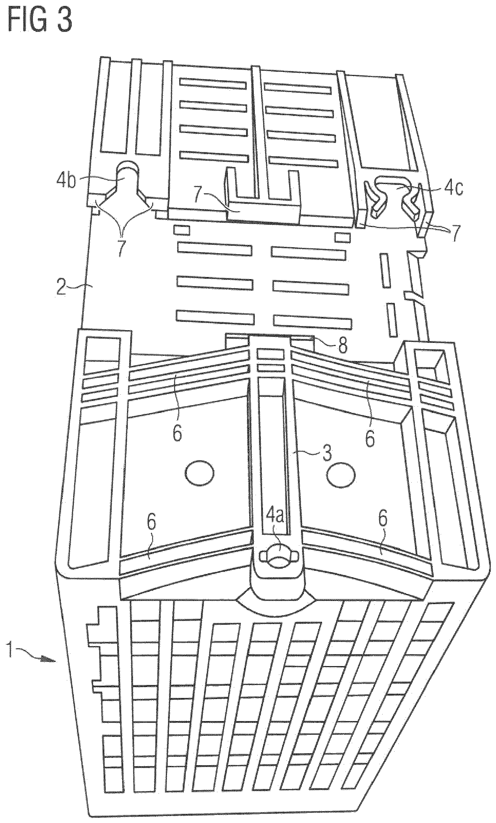

Fig. 3 shows an axonometric rear view of an exemplary embodiment of the housing with the moveable element in the retracted position according to the invention.

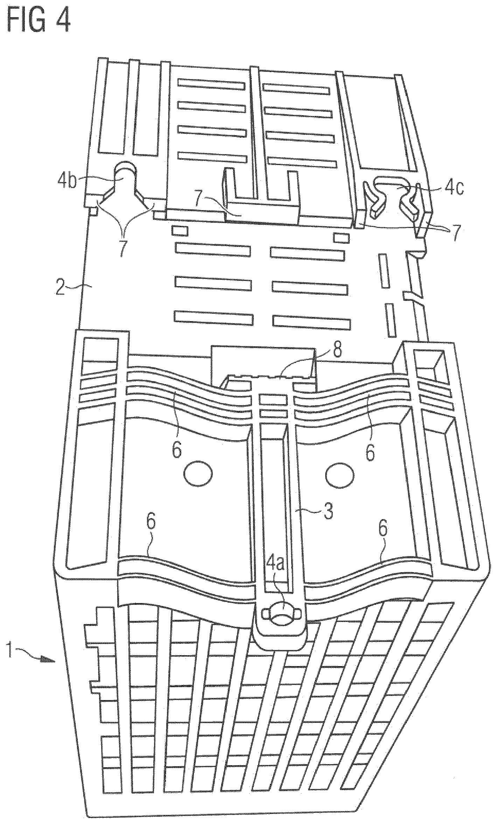

Fig. 4 shows an axonometric rear view of an exemplary embodiment of the housing with the moveable element in the mounting position according to the invention.

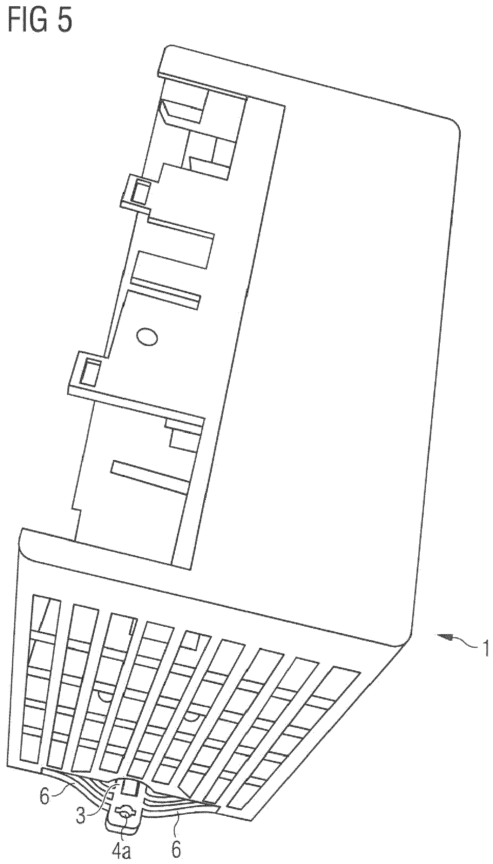

Fig. 5 shows an axonometric front view of an exemplary embodiment of the housing with the moveable element in the mounting position according to the invention.

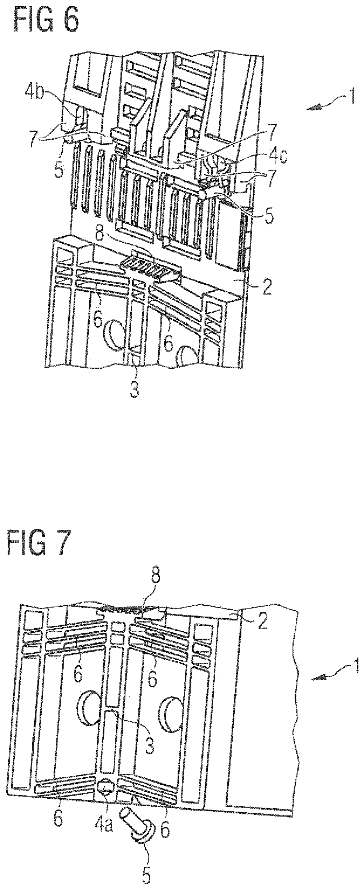

Fig. 6 shows an axonometric rear view of an exemplary embodiment of the housing with the moveable element in the retracted position and fastening means according to the invention.

Fig. 6 depicts two fastening means 5 and the second and third mounting apertures 4b and 4c. In this example, the fastening means 5 are screws. The fastening means 5 might also be bolts, hooks, nails, or the like. Not shown in Fig. 6 is a surface, where the fastening means 5 are attached to. In this situation, when the housing 1 is slid down, the second and third mounting apertures 4b and 4c receive the fastening means 5 and the housing 1 is mounted to the surface. As described above, in this embodiment the third mounting aperture 4c is Ω-shaped and can clamp around a longitudinal extension of the fastening means 5, thereby securing the housing 1 from sliding off or being slid off the fastening means 5.

Fig. 7 shows an axonometric rear view of an exemplary embodiment of the housing with the moveable element in the retracted position and fastening means according to the invention.

Fig. 7 depicts the moveable element 3 in a retracted position, the first mounting aperture 4a and a fastening means 5. The moveable element 3 can be moved, for example by hand, to provide a mounting position. Then, the first mounting aperture 4a is positioned outside of an area of the rear-plate 2. In this embodiment, the first mounting aperture 4a is a mounting hole. In the mounting position, a fastening means 5, for example a screw, a bolt, a nail, or the like, can be inserted into the first mounting aperture 4a and further attached to a surface, thereby further securing the mounting of the housing 1 to the surface.

Figure 8 shows an axonometric rear view of an exemplary embodiment of the housing with the moveable element in the retracted position and a mounting rail according to the invention.

In this embodiment, the rear-plate 2 comprises five mounting hooks 7 and the moveable element 3 comprises a latch 8. The mounting hooks 7 and the latch 8 are configured to receive a mounting rail 9. This allows for the housing to be mounted on a surface not only by mounting means 5 but also by means of a mounting rail 9. The mounting rail 9 can be for example a DIN rail or a top hat rail according to IEC/EN 60715. The use cases for the housing 1 are thereby further enhanced. A synergy effect is formed by the moveable element 3 by not only comprising the first mounting aperture 4a but also comprising the latch 8. When mounting the housing 1 to a mounting rail 9, the moveable element 3 allows the latch 8 to retract and facilitate a clamping of the mounting rail 9 between the mounting hooks 7 and the latch 8. In this embodiment, the deformable elements 6 are configured to spring-load the latch 8, thereby further facilitating the clamping.

The illustration in the drawings is in schematic form. It is noted that in different figures, similar or identical elements may be provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

### List of reference signs

- 1: Housing
- 2: Rear-plate
- 3: Moveable element
- 4a: First mounting aperture
- 4b: Second mounting aperture
- 4c: Third mounting aperture
- 5: Mounting means
- 6: Elastically deformable element
- 7: Mounting hook
- 8: Latch
- 9: Mounting Rail

## Claims

1. Housing (1) for mounting electrical equipment on a surface, comprising a rear-plate (2) and a moveable element (3); wherein the moveable element (3) comprises a first mounting aperture (4a) and the rear-plate (2) comprises at least one second mounting aperture (4b); wherein the mounting apertures (4a, 4b) are configured to receive mounting means (5); wherein the moveable element (3) is configured to selectively provide a mounting position and a retracted position; and wherein at the mounting position the first mounting aperture (4a) is positioned outside of an area of the rear-plate (2) and at the retracted position the moveable element (3) and the first mounting aperture (4) are positioned within the area of the rear-plate (2).

2. Housing (1) of claim 1, further comprising at least one elastically deformable element (6); wherein the moveable element (3) is connected to the rear-plate (2) via at least one elastically deformable element (6).

3. Housing (1) of claim 2, wherein the at least one elastically deformable element (6) is configured for a first stable state and a second stable state; wherein, the first stable state is at the retracted position of the moveable element (3) and the second stable state is in the mounting position of the moveable element (3).

4. Housing (1) of claim 2, wherein the at least one elastically deformable element (6) is of a ribbon-type.

5. Housing (1) of claim 2, wherein the movable element (3) is connected to the rear-plate (2) via a plurality of elastically deformable elements (6) which are attached to the moveable element (3) via a plurality of attachment positions; wherein the attachment positions are spaced apart.

6. Housing (1) of claim 5, wherein the plurality of elastically deformable elements (6) are partly grouped together.

7. Housing (1) of claim 2, wherein the rear-plate (2), the moveable element (3) and the at least one elastically deformable element (6) are integrally formed.

8. Housing (1) of any of the preceding claims, wherein the housing (1) is integrally formed.

9. Housing (1) of any of the preceding claims, wherein the rear-plate comprises at least one third mounting aperture (4c).

10. Housing (1) of claim 9, wherein the mounting apertures (4a, 4b, 4c) are arranged in a triangle pattern.

11. Housing (1) of any of the preceding claims, wherein the area of the rear-plate (2) is a boundary surface of the housing (1).

12. Housing (1) of any of the preceding claims, wherein the rear-plate 2 comprises at least one mounting hook (7) and the moveable element (3) comprises a latch (8); wherein the at least one mounting hook (7) and the latch (8) are configured to receive a mounting rail (9), specifically a DIN rail, more specifically a top hat rail according to IEC/EN 60715.

13. Housing (1) of claim 2 and 12, wherein one at least one elastically deformable element (6) is configured to spring-load the latch (8).
